# EUROPÄISCHE PATENTSCHRIFT

(11) **EP 3 382 216 B1**
(45) Veröffentlichungstag und Bekanntmachung des Hinweises auf die Patenterteilung: **28.04.2021**
(21) Anmeldenummer: 18162462.8
(22) Anmeldetag: 19.03.2018
(51) Int. Cl.: F16B 37/12, F16B 21/04, F16B 45/00

(54) **HALTENOCKEN UND SCHNELLVERSCHLUSSSYSTEM HIERMIT**
RETAINING CAM AND QUICK RELEASE SYSTEM THEREWITH
CAME DE RETENUE ET SYSTÈME DE FERMETURE RAPIDE CORRESPONDANT

(30) Priorität: 30.03.2017 DE 202017101870 U
(43) Veröffentlichungstag der Anmeldung: 03.10.2018
(73) Patentinhaber: Fairchild Fasteners Europe - Camloc GmbH, 65779 Kelkheim (Taunus) (DE)
(72) Erfinder: Trömer, Michael, 64572 Büttelborn (DE)
(74) Vertreter: Keil & Schaafhausen Patentanwälte PartGmbB

(56) Entgegenhaltungen:
- DE-A1-102010 044 227
- DE-U- 1 970 275
- US-A- 3 297 293
- US-A- 3 405 596

## Beschreibung

Die Erfindung betrifft einen Haltenocken, insbesondere für ein Schnellverschlusssystem sowie ein Schnellverschlusssystem mit einem solchen Haltenocken. Ein Haltenocken weist einen hohlzylindrischen Grundkörper und einen von diesem radial vorstehenden Auflageflansch auf. Der Grundkörper ist mit einem Außengewinde zur Verankerung in einer Bohrung eines Bauteils und einer Innenkontur zur Verbindung mit einem Verschlusszapfen des Schnellverschlusssystems versehen.

In bekannten Schnellverschlusssystemen werden Haltenocken üblicherweise in mit einem Innengewinde versehene Bohrungen eines ersten Bauteils eingeschraubt, bis der Auflageflansch des Haltenockens auf dem die Bohrung umgebenden Rand des Bauteils aufliegt. Dieses Bauteil kann dann mittels des Schnellverschlusssystems mit einem weiteren Bauteil verbunden werden, indem durch eine Öffnung des weiteren Bauteils ein Verschlusszapfen geführt wird, der dann mit dem Haltenocken, insbesondere lösbar, verbunden wird. Weiter ist aus der DE 20 2013 001 061 U1 ein Haltenocken für ein Schnellverschlusssystem bekannt, bei welchem der Haltenocken mittels eines Käfigs an einem Bauteil befestigbar ist. Die US 3 405 596 A offenbart einen weiteren bekannten Haltenocken.

Aufgabe der vorliegenden Erfindung ist es, einen Haltenocken sowie ein Schnellverschlusssystem bereitzustellen, das den Bearbeitungsaufwand für die Montage des Haltenockens, insbesondere in nichtmetallischen Bauteilen, reduziert. Weiter ist es ein Ziel der vorliegenden Erfindung, die Komponenten eines Schnellverschlusssystems in großer Stückzahl wirtschaftlich herzustellen.

Ein erfindungsgemäßer Haltenocken gemäß Anspruch 1 weist einen, ggf. einseitig geschlossenen, hohlzylindrischen Grundkörper mit einem Außengewinde zur Verankerung in einer Bohrung eines Bauteils und einer Innenkontur zur Verbindung mit einem Verschlusszapfen auf. Der Grundkörper ist dabei mit einem radial von dem Grundkörper vorstehenden Auflageflansch versehen. Der Grundkörper weist wenigstens zwei zueinander um den Umfang des Grundkörpers versetzt angeordnete, seitliche Abflachungen auf. Das Außengewinde ist erfindungsgemäß ein selbstschneidendes, dreigängiges Außengewinde, dessen um 120° versetzte Startpunkte außerhalb der seitlichen Abflachungen, d.h. in Umfangsrichtung zu diesen versetzt, liegen.

Durch die Ausbildung des Außengewindes als ein selbstschneidendes Außengewinde kann der Haltenocken, insbesondere bei im Vergleich zum Haltenocken weicheren Umgebungsmaterialien, direkt mittels des selbstschneidenden Außengewindes in die Bohrung des Bauteils eingeschraubt werden, ohne dass zuvor ein Innengewinde in die Bohrung des Bauteils eingebracht wurde. Hierdurch kann ein Arbeitsschritt für die Montage des Haltenockens entfallen. Abhängig von den Materialpaarungen kann hierbei auf eine Schneidgeometrie des selbstschneidenden Außengewindes verzichtet werden, bspw. bei einem metallischen Haltenocken, der in ein weicheres, nichtmetallisches Umgebungsmaterial einschraubt werden soll.

Beim Einschrauben eines Haltenockens mit einem eingängigen Standardgewinde ist es häufig schwierig, eine rechtwinklige Positionierung der Längsachse des Haltenockens zu der Bauteiloberfläche zu erreichen. So ergibt sich bei einem eingängigen Regelgewinde der erste Auflagepunkt am Gewindebeginn naturgemäß außerhalb der durch die Längsachse definierten Mitte des Haltenockens auf dem Umfang des Kerndurchmessers. Dies bewirkt, dass bei einem entsprechenden Widerstand, wie er beim selbstformenden Einschrauben gegeben ist, eine, z.B. taumelnde, nicht definierbare Bewegung auftritt, die zu einem Verkanten des Gewindes führt und das Einschraubmoment in unerwünschter Weise erhöht. Je größer der Durchmesser des zu installierenden Haltenockens ist, umso größer wird hierbei der Hebelarm für derartige Kippbewegungen, so dass bei größeren Gewindedurchmessern die selbstformende Installation des Haltenockens entsprechend schwieriger wird. Das erfindungsgemäß dreigängige Außengewinde hat gegenüber einem eingängigen Gewinde den Vorteil, dass der Haltenocken mit drei Startpunkten auf dem Rand der Bohrung des Bauteils aufgesetzt werden kann, so dass die Ausrichtung zur Bauteiloberfläche erleichtert wird. Die Startpunkte des dreigängigen Außengewindes liegen dabei vorzugsweise in einer gemeinsamen Ebene, die senkrecht zu der Längsachse des Haltenockes ausgerichtet ist.

Grundsätzlich ist eine spanende Herstellung des Haltenockens aus einem metallischen Werkstoff möglich. Aufgrund der zumeist komplexen Innenkontur zur Verbindung mit einem Verschlusszapfen ist jedoch eine nichtspanende Herstellung jedenfalls in größeren Stückzahlen deutlich wirtschaftlicher. Für die Herstellung des Haltenockens, bspw. im Spritzgussverfahren, ist es erforderlich, Entformungsmöglichkeiten für das Außengewinde vorzugsehen. Erfindungsgemäß ist der Grundkörper des Haltenockens daher mit wenigstens zwei zueinander um den Umfang versetzten seitlichen Abflachungen versehen, die ein Entformen des Außengewindes des Haltenockens ermöglichen. Die seitlichen Abflachungen sind dabei durch Entfernen von Zylindersegmenten insbesondere parallel zur Längsachse des Haltenockens gebildet.

Nach einer bevorzugten Ausführungsform des Haltenockens sind die seitlichen Abflachungen derart gestaltet, dass diese jeweils zumindest bereichsweise bis zum Innendurchmesser des Außengewindes reichen. Mit anderen Worten sind die seitlichen Abflachungen derart gestaltet, dass in einem senkrecht zur Längsachse des Haltenockens liegenden Querschnitt gesehen die Abflachungen durch Sekanten definiert werden, die den Innendurchmesser des Außengewindes schneiden oder radial weiter innen zu dem Innendurchmesser des Außengewindes liegen. Dies stellt sicher, dass das Außengewinde leicht entformbar ist. Grundsätzlich ist es jedoch auch möglich, dass die seitlichen Abflachungen nicht vollständig bis zum Innendurchmesser des Außengewindes reichen, so dass bei der Entformung eine geringfügige elastische oder plastische Deformation des Außengewindes stattfindet.

Zweckmäßigerweise ist die Anzahl der seitlichen Abflachungen gleich der Anzahl der Gänge des Außengewindes. Für eine gute Zentrierung des Haltenockens auf dem Rand der Bohrung des Bauteils, in das der Haltenocken eingeschraubt werden soll, wird ein dreigängiges Außengewinde mit zueinander um 120° versetzten Startpunkten vorgesehen. Mit dieser Ausführung kann eine besonders gute Positionierung mit guten Installationsbedingungen erreicht werden, ohne dass es zu dem unerwünschten Verkanten und der damit verbundenen Gefahr des Verklemmens oder gar Beschädigens des Bauteils kommt.

Zur Verbindung mit einem Verschlusszapfen kann die Innenkontur des Haltenockens wenigstens einen Einführbereich, wenigstens eine Rampe, wenigstens eine Rastvertiefung und/oder wenigstens einen Anschlag aufweisen. Auf diese Weise ist es möglich, einen mit einem nockenartigen Vorsprung bzw. einem Kreuzstift ausgestatteten Verschlusszapfen lösbar mit der Innenkontur des Haltenockens zu verbinden. Alternativ hierzu ist es auch möglich, die Innenkontur des Haltenockens mit einem Innengewinde zu versehen. Weiter ist es alternativ auch möglich, den Haltenocken mit einer Haltenockenschrauben mit Außengewinde zu versehen, auf die dann ein Verschlussbolzen mit Innengewinde aufschraubbar ist.

Um die Ausrichtung des Haltenockens in einer Bohrung weiter zu verbessern, kann der Grundkörper auf seiner dem Auflageflansch abgewandten Seite einen, bspw. zylindrischen oder konischen, Zentrierbereich aufweisen, dessen Außendurchmesser zweckmäßigerweise kleiner als der Außendurchmesser des Außengewindes sein kann. Auf diese Weise ist es möglich, den Haltenocken in der Bohrung des Bauteils zu führen, bevor die Startpunkte des mehrgängigen Außengewindes auf dem Rand der Bohrung aufliegen.

Für eine bündige Installation des Haltenockens in dem Bauteil kann die Bohrung mit einer Fase versehen sein. Hierzu kann der Auflageflansch des Haltenockens eine entsprechende Gegenkontur aufweisen, bspw. derart, dass sich der Auflageflansch in Richtung zu dem Außengewinde hin konisch verjüngt.

Nach einer besonders bevorzugten Ausführungsform der Erfindung sind der Grundkörper mit dem Außengewinde, den seitlichen Abflachungen und der Auflageflansch des Haltenockens als ein einstückiges Spritzgussbauteil gestaltet. Insbesondere besteht der erfindungsgemäße Haltenocken aus einem metallischen Werkstoff.

Ein Schnellverschlusssystem nach der vorliegenden Erfindung weist einen Haltenocken der oben genannten Art sowie einen Verschlusszapfen auf, der zur Verbindung mit der Innenkontur des Haltenockens eine entsprechende Gegenkontur, bspw. eine Außenkontur, aufweist. Weiter ist der Verschlusszapfen vorzugsweise mit einem flanschartigen Auflagebereich versehen, mit dem der Verschlusszapfen sich direkt oder indirekt an einem weiteren Bauteil abstützen kann.

Für einige Anwendungsfälle wird es bevorzugt, wenn die zu verbindenden Bauteile mittels Federkraft miteinander verklemmt werden. Dies kann bspw. dadurch erfolgen, dass das Schnellverschlusssystem zusätzlich ein sich an dem Auflagebereich des Verschlusszapfens abstützendes Federelement aufweist. Alternativ kann auch zwischen einer Gegenkontur des Verschlusszapfens und der Innenkontur des Haltenockens ein Federelement vorgesehen sein. Ein zwischen dem Haltenocken und dem Verschlusszapfen angeordnetes Federelement wirkt nicht nur einem unbeabsichtigten Öffnen des Schnellverschlusssystems entgegen, sondern kann auch Vibrationen zwischen den miteinander zu verbindenden Bauteilen dämpfen.

Die Außen- oder Gegenkontur des Verschlusszapfens kann wenigstens einen radial von einem Zapfenbereich vorspringenden Nocken bzw. Kreuzstift oder ein Gewinde aufweisen.

Die Erfindung wird nachfolgend auch unter Bezugnahme auf die beigefügten Zeichnungen näher erläutert. Es zeigen schematisch:
- Figur 1: in Draufsicht einen Haltenocken in seinem in ein Bauteil eingeschraubten Zustand,
- Figur 2: einen Schnitt entlang der Linie A-A in Figur 1,
- Figur 3: in einer zur Figur 1 um 180° gedrehten Draufsicht den Haltenocken ,
- Figur 4: in einer Ansicht entsprechend Figur 3 einen Haltenocken nach einer Ausführungsform der Erfindung,
- Figur 5: in teilweise geschnittener Ansicht ein Schnellverschlusssystem nach einer Ausführungsform der Erfindung im nicht verbundenen Zustand,
- Figur 6: das Schnellverschlusssystem nach Figur 5 in einem mit zwei Bauteilen verbundenen Zustand,
- Figur 7: in Seitenansicht einen Haltenocken nach einer zweiten Ausführungsform der Erfindung,
- Figur 8: in Seitenansicht einen Haltenocken nach einer dritten Ausführung der Erfindung und
- Figur 9: in teilweise geschnittener Seitenansicht einen Haltenocken nach einer vierten Ausführungsform der Erfindung.

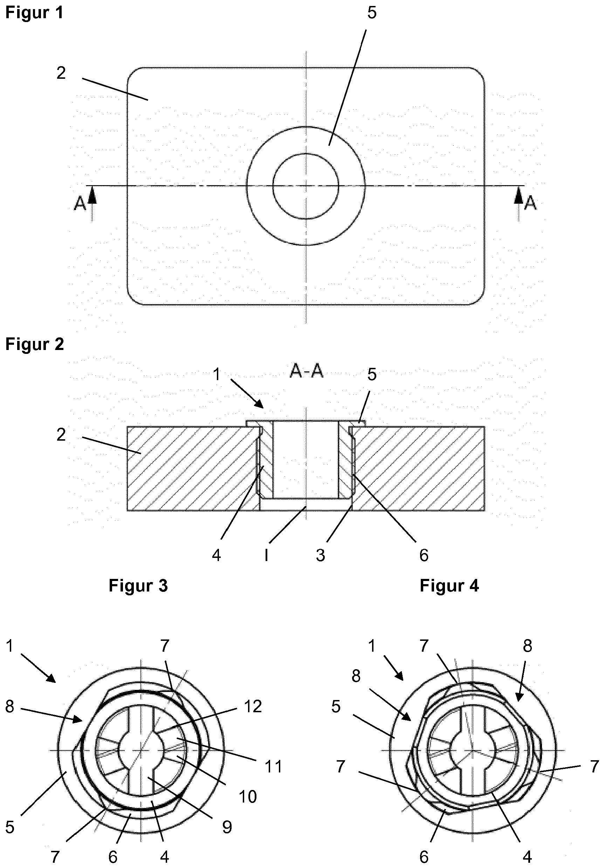

In den Figuren 1 bis 3 ist ein Haltenocken 1 in verschiedenen Ansichten dargestellt. Die Figuren 1 und 2 zeigen den Haltenocken dabei in einem mit einem ersten Bauteil 2 verbundenen Zustand. Das erste Bauteil 2 weist zur Verbindung mit den Haltenocken 1 eine zylindrische Öffnung oder Bohrung 3 auf, in welche der Haltenocken 1 eingebracht werden kann.

Der Haltenocken 1 weist einen in der dargestellten Ausführungsform hohlzylindrischen Grundkörper 4 auf, der auf seinem in Figur 2 oberen Ende mit einem Auflageflansch 5 versehen ist, der radial über den Grundkörper 4 nach außen hervorsteht. In dem in den Figuren 1 und 2 dargestellten Zustand stützt sich der Auflageflansch 5 auf der Oberfläche des ersten Bauteils 2 ab.

Der Grundkörper 4 definiert eine Längsachse I des Haltenockens 1. Abweichend von der dargestellten Ausführungsform kann der Grundkörper 4 einseitig, z. B. in Figur 2 unten, geschlossen ausgebildet sein. Weiter ist der Grundkörper 4 mit einem Außengewinde 6 versehen, mit dem der Haltenocken 1 in das Bauteil 2 eingeschraubt ist.

Das Außengewinde 6 ist ein zweigängiges, selbstschneidendes Außengewinde, jedoch ohne die für Gewindeschneider übliche Schneidgeometrie. Mit anderen Worten entspricht das Außengewinde 6 im Wesentlichen einem zweigängigen Regelgewinde. Die beiden Startpunkte 7 des Außengewindes 6 liegen, wie in Figur 3 gezeigt, um 180° zueinander versetzt.

Der Grundkörper 4 des Haltenockens 1 ist weiter mit zwei seitlichen Abflachungen 8 ausgebildet, die in Figur 3 erkennbar sind. Die beiden Abflachungen 8 liegen einander ebenfalls um 180° versetzt gegenüber und sind so gestaltet, dass parallel zur Längsachse I verlaufende Zylindersegmente in der grundsätzlich zylindrischen Außenkontur des Haltenockens fehlen. Wie aus Figur 3 ersichtlich ist, erstrecken sich die Abflachungen nur bis zu dem Auflageflansch 5, so dass dieser seine kreisförmige Gestaltung behält.

Die Größe der seitlichen Abflachungen 8 ist dabei derart gewählt, dass die in Figur 3 ersichtliche Sekante, die die Abflachungen 8 definiert, den Innendurchmesser des Außengewindes 6 berührt. Mit anderen Worten ist der zwischen dem Innendurchmesser und dem Außendurchmesser des Außengewindes 6 gelegene Bereich zumindest teilweise entfernt. Grundsätzlich ist es auch abweichend von der Darstellung in Figur 3 möglich, dass die seitlichen Abflachungen 8 radial weiter nach innen oder geringfügig weiter nach außen versetzt sind. So können die seitlichen Abflachungen 8 auch über dem durch das Außengewinde 6 definierten Bereich bis in den Grundkörper 4 des Haltenockens 1 gehen.

In Figur 3 ist weiter eine in Figur 2 aus Gründen der Übersichtlichkeit weggelassene Innenkontur des Haltenockens 1 dargestellt. In dieser Form ist der Haltenocken 1 zur Verbindung mit einem Verschlusszapfen ausgebildet, der bspw. einen Kreuzstift aufweist. Entsprechend weist die Innenkontur einen Einführbereich 9, zwei sich daran anschließende Rampen 10, zwei sich an die Rampe anschließende Rastvertiefungen 11 sowie zwei die Rastvertiefungen 11 begrenzende Anschläge 12 auf.

Die in Figur 4 dargestellte erfindungsgemäße Ausführungsform des Haltenockens 1 ist gegenüber der Ausführungsform der Figuren 1 bis 3 dahingehend abgewandelt, dass das Außengewinde 6 ein ebenfalls selbstschneidendes, jedoch dreigängiges Außengewinde mit entsprechend drei Startpunkten 7 ist. Die drei Startpunkte 7 sind zueinander um jeweils 120° versetzt angeordnet. Weiter ist der Grundkörper 4 des Haltenockens 1 in der Ausführungsform nach Figur 4 auch mit drei seitlichen Abflachungen 8 versehen, die ebenfalls zueinander um 120° versetzt angeordnet sind.

Gegenüber der Ausführungsform der Figuren 1 bis 3 weist diese Gestaltung den Vorteil auf, dass durch den zusätzlichen Startpunkt 7 eine stabilere Auflage des Haltenockens 1 auf den Rand der Bohrung 3 möglich ist, wenn der Haltenocken 1 in das Bauteil 2 eingeschraubt werden soll. Dies verbessert auch die Ausrichtung des Haltenockens 1, so dass dieser ohne Verkanten konzentrisch zu der Bohrung 3 in das Bauteil 2 eingeschraubt werden kann.

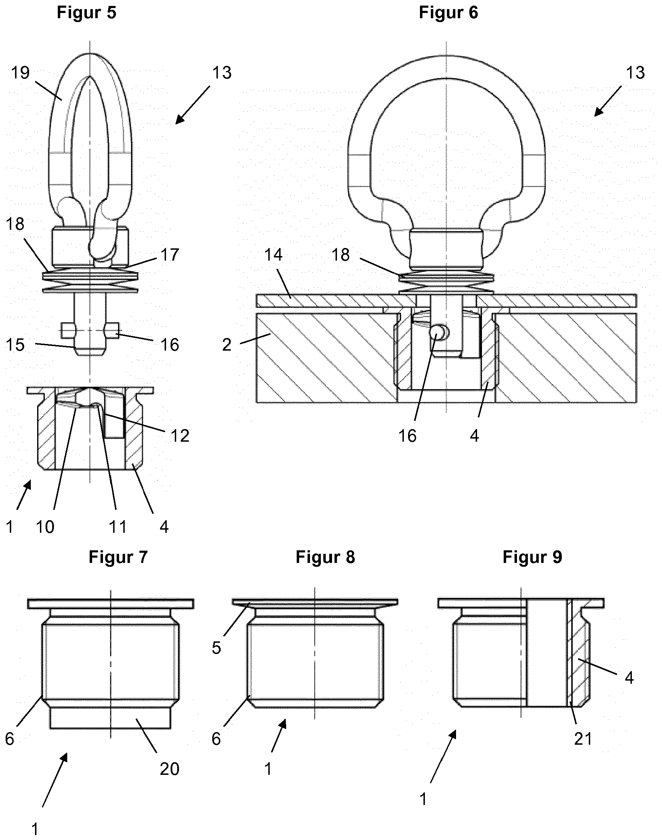

In den Figuren 5 und 6 ist der Haltenocken 1 als Bestandteil eines Schnellverschlusssystems zusammen mit einem Verschlusszapfen 13 dargestellt. Wie aus Figur 6 ersichtlich ist, dient das Schnellverschlusssystem dazu, das erste Bauteil 2 über den Haltenocken 1 und den Verschlusszapfen 13 mit einem zweiten Bauteil 14 zu verbinden.

Der Verschlusszapfen 13 weist in der dargestellten Ausführungsform einen Zapfen 15 mit einem sich hierzu senkrecht erstreckenden Kreuzstift 16 auf. Weiter ist der Verschlusszapfen 13 mit einem flanschartigen Auflagebereich 17 versehen, an dem sich in der dargestellten Ausführungsform Federelemente 18 abstützen. Auf der dem Kreuzstift 16 abgewandten Seite ist der Verschlusszapfen 13 in der dargestellten Ausführungsform mit einer Öse 19 versehen.

Zur Verbindung der Bauteile 2 und 14 wird zunächst der Haltenocken 1 wie beschrieben in die Bohrung 3 des Bauteils 2 eingeschraubt. Das Bauteil 14 weist ebenfalls eine Durchgangsöffnung auf, durch welche der Zapfen 15 und der Kreuzstift 16 durchgeführt werden. Die Bauteile 2 und 14 können dann miteinander verriegelt werden, indem der Zapfen 15 mit dem Kreuzstift 16 zunächst durch den Einführbereich 9 des Haltenockens 1 in diesen eingesetzt werden. Bei einer Verdrehung des Verschlusszapfens 13 relativ zu dem Haltenockens 1 gleitet der Kreuzstift 16 zunächst über die Rampe 10 bis zu der Rastvertiefung 11. Die Federelemente 18 werden hierbei komprimiert. Der Anschlag 12 verhindert eine weitere Drehung des Verschlusszapfens 13 relativ zu dem Haltenocken 1. Durch die Klemmkraft der Federelemente 18 wird der Kreuzstift 16 in der Rastvertiefung 11 vorgespannt gehalten, wobei gleichzeitig die Bauteile 2 und 14 miteinander verklemmt werden.

In Figur 7 ist eine Abwandlung der zuvor beschriebenen Ausführungsformen des Haltenockens 1 dargestellt. Die Abwandlung besteht darin, dass auf der dem Auflageflansch 5 gegenüberliegenden Seite des Haltenockens 1 ein zylindrischer Zentrierbereich 20 ausgebildet ist. Der Zentrierbereich 20 weist dabei in der dargestellten Ausführungsform einen kleinen Außendurchmesser auf als der Innendurchmesser des Außengewindes 6.

In Figur 8 ist eine weitere Abwandlung des Haltenockens 1 dargestellt, wobei der Auflageflansch 5 auf seiner dem Außengewinde 6 zugewandten Seite (unten in Figur 8) mit einem konischen Übergangsbereich bzw. einer Anfasung versehen ist. Mit anderen Worten verjüngt sich der Auflageflansch in Richtung zu dem Außengewinde 6, so dass der Haltenocken 1 bündig bis auf die dem zweiten Bauteil 14 zugewandte Oberfläche des ersten Bauteils 2 eingeschraubt werden kann, wenn die Bohrung 3 mit einer entsprechenden konischen Gegenkontur versehen ist.

In der Ausführungsform der Figur 9 ist der Haltenocken 1 mit einer alternativen Innenkontur, nämlich mit einem Innengewinde 21 versehen. Der in Figur 9 dargestellte Haltenocken eignet sich damit zur Verbindung mit einem Verschlusszapfen, der ein Außengewinde aufweist.

Abweichend von den in den Figuren dargestellten Ausführungsformen können einzelne Merkmale der verschiedenen Ausführungsformen miteinander kombiniert werden. So kann bspw. der in Figur 7 gezeigte Zentrierbereich 20 auch an dem Haltenocken der Figuren 3 oder 4 vorgesehen sein.

Weiter ist die vorliegende Erfindung nicht auf die dargestellten Ausführungsformen der Verbindungskonturen und Gegenkonturen des Haltenockens und des Verbindungszapfens beschränkt. Es kann, jedoch nicht erfindungsgemäß, der Haltenocken auch eine Haltenockenschrauben mit Außengewinde aufweisen, die mit einem bereichsweise hülsenartigen Verschlussbolzen mit Innengewinde verbindbar ist.

### Bezugszeichen:

- 1: Haltenocken
- 2: Bauteil
- 3: Bohrung
- 4: Grundkörper
- 5: Auflageflansch
- 6: Außengewinde
- 7: Startpunkt
- 8: Abflachung
- 9: Einführbereich
- 10: Rampe
- 11: Rastvertiefung
- 12: Anschlag
- 13: Verschlusszapfen
- 14: Bauteil
- 15: Zapfen
- 16: Kreuzstift
- 17: Auflagebereich
- 18: Federelement
- 19: Öse
- 20: Zentrierbereich
- 21: Innengewinde

- I: Längsachse

## Patentansprüche

1. Haltenocken, insbesondere für ein Schnellverschlusssystem, mit einem hohlzylindrischen Grundkörper (4), der ein Außengewinde (6) zur Verankerung in einer Bohrung (3) eines Bauteils (2) und eine Innenkontur (9, 10, 11, 12; 21) zur Verbindung mit einem Verschlusszapfen (13) aufweist, und mit einem radial von dem Grundkörper (4) vorstehenden Auflageflansch (5), wobei der Grundkörper (4) wenigstens zwei zueinander um den Umfang versetzte seitliche Abflachungen (8) aufweist, **dadurch gekennzeichnet, dass** das Außengewinde (6) ein selbstschneidendes, dreigängiges Außengewinde ist, dessen zueinander um 120° versetzte Startpunkte (7) außerhalb der seitlichen Abflachungen (8) liegen.

2. Haltenocken nach Anspruch 1, **dadurch gekennzeichnet, dass** die seitlichen Abflachungen (8) jeweils zumindest bereichsweise bis zum Innendurchmesser des Außengewindes (6) reichen.

3. Haltenocken nach Anspruch 1 oder 2, **dadurch gekennzeichnet, dass** die Anzahl der seitlichen Abflachungen (8) gleich der Anzahl der Gänge des Außengewindes (6) ist.

4. Haltenocken nach einem der vorhergehenden Ansprüche, **dadurch gekennzeichnet, dass** die Innenkontur einen Einführbereich (9), eine Rampe (10), eine Rastvertiefung (11) und/oder einen Anschlag (12) aufweist.

5. Haltenocken nach einem der Ansprüche 1 bis 3, **dadurch gekennzeichnet, dass** die Innenkontur ein Innengewinde (21) aufweist.

6. Haltenocken nach einem der vorhergehenden Ansprüche, **dadurch gekennzeichnet, dass** der Grundkörper (4) auf seiner dem Auflageflansch (5) abgewandten Seite einen zylindrischen oder konischen Zentrierbereich (20) aufweist, dessen Außendurchmesser kleiner als der Außendurchmesser des Außengewindes (6) ist.

7. Haltenocken nach einem der vorhergehenden Ansprüche, **dadurch gekennzeichnet, dass** der Auflageflansch (5) sich in Richtung zu dem Außengewinde (6) konisch verjüngt.

8. Haltenocken nach einem der vorhergehenden Ansprüche, **dadurch gekennzeichnet, dass** der Grundkörper (4) mit dem Außengewinde (6) und den seitlichen Abflachungen (8) und der Auflageflansch (5) ein einstückiges Spritzgussbauteil ist.

9. Schnellverschlusssystem mit einem Haltenocken (1) nach einem der vorhergehenden Ansprüche und einem Verschlusszapfen (13), der zur Verbindung mit der Innenkontur (9, 10, 11, 12; 21) des Haltenockens (1) eine Gegen- oder Außenkontur (15, 16) sowie einen flanschartigen Auflagebereich (17) aufweist.

10. Schnellverschlusssystem nach Anspruch 9, das ferner wenigstens ein sich an dem Auflagebereich (17) abstützendes Federelement (18) aufweist.

11. Schnellverschlusssystem nach Anspruch 9 oder 10, **dadurch gekennzeichnet, dass** die Gegen- oder Außenkontur des Verschlusszapfens (13) wenigstens einen radial von einem Zapfenbereich (15) vorspringenden Nocken (16) oder ein Außengewinde aufweist.

## Claims

1. Holding cam, in particular for a quick-release system, with a hollow cylindrical base body (4), which has an external thread (6) for anchoring in a bore (3) of a component (2) and an internal contour (9, 10, 11, 12; 21) for connecting to a locking pin (13), and with a support flange (5) projecting radially from the base body (4), wherein the base body (4) comprises at least two lateral flat portions (8) offset from one another around the circumference, **characterized in that** the external thread (6) is a self-tapping, three-turn external thread, the starting points (7) of which are offset by 120° and located outside the lateral flat portions (8).

2. Holding cam according to Claim 1, **characterized in that** the lateral flat portions (8) each extend at least in regions to the inner diameter of the external thread (6).

3. Holding cam according to Claim 1 or 2, **characterized in that** the number of lateral flat portions (8) is equal to the number of turns of the external thread (6).

4. Holding cam according to any one of the preceding claims, **characterized in that** the internal contour comprises an insertion region (9), a ramp (10), a latching recess (11), and/or a stop (12) .

5. Holding cam according to any one of Claims 1 to 3, **characterized in that** the internal contour has an internal thread (21) .

6. Holding cam according to any one of the preceding claims, **characterized in that** on its side facing away from the support flange (5), the base body (4) comprises a cylindrical or conical centering region (20), the outer diameter of which is smaller than the outer diameter of the external thread (6).

7. Holding cam according to any one of the preceding claims, **characterized in that** the support flange (5) conically tapers in the direction of the external thread (6).

8. Holding cam according to any one of the preceding claims, **characterized in that** the base body (4) with the external thread (6) and the lateral flat portions (8) and the support flange (5) is a single-piece injection-molded component.

9. Quick-release system with a holding cam (1) according to any one of the preceding claims and a locking pin (13) comprising a flange-like support region (17) as well as a counter-contour or external contour (15, 16) for connecting to the internal contour (9, 10, 11, 12; 21) of the holding cam (1).

10. Quick-release system according to Claim 9, furthermore comprising at least one spring element (18) supported on the support region (17).

11. Quick-release system according to Claim 9 or 10, **characterized in that** the counter-contour or external contour of the locking pin (13) comprises an external thread or at least one cam (16) protruding radially from a pin region (15).

## Revendications

1. Ergot de retenue, en particulier pour un système de fermeture rapide, comprenant un corps de base (4) en forme de cylindre creux, lequel présente un filetage extérieur (6) pour l'ancrage dans un alésage (3) d'un composant (2) et un contour intérieur (9, 10, 11, 12; 21) pour la connexion à un tourillon de fermeture (13), et comprenant une bride de support (5) faisant saillie radialement du corps de base (4), le corps de base (4) présentant au moins deux parties plates (8) latérales décalées du diamètre l'une par rapport à l'autre , **caractérisé en ce que** le filetage extérieur (6) est un filetage extérieur à trois filets auto-taraudant, dont les points de départ (7) décalés de 120° les uns par rapport aux autres se situent en dehors des parties plates (8) latérales.

2. Ergot de retenue selon la revendication 1, **caractérisé en ce que** les parties plates (8) latérales s'étendent respectivement au moins par zone jusqu'au diamètre intérieur du filetage extérieur (6).

3. Ergot de retenue selon la revendication 1 ou 2, **caractérisé en ce que** le nombre des parties plates (8) latérales est égal au nombre des filets du filetage extérieur (6) .

4. Ergot de retenue selon l'une quelconque des revendications précédentes, **caractérisé en ce que** le contour intérieur présente une zone d'insertion (9), une rampe (10), un creux d'arrêt (11) et/ou une butée (12).

5. Ergot de retenue selon l'une quelconque des revendications 1 à 3, **caractérisé en ce que** le contour intérieur présente un filetage intérieur (21).

6. Ergot de retenue selon l'une quelconque des revendications précédentes, **caractérisé en ce que** le corps de base (4) présente sur son côté opposé à la bride de support (5) une zone de centrage (20) cylindrique ou conique, dont le diamètre extérieur est inférieur au diamètre extérieur du filetage extérieur (6).

7. Ergot de retenue selon l'une quelconque des revendications précédentes, **caractérisé en ce que** la bride de support (5) se rétrécit de manière conique dans la direction vers le filetage extérieur (6)

8. Ergot de retenue selon l'une quelconque des revendications précédentes, **caractérisé en ce que** le corps de base (4) comprenant le filetage extérieur (6) et les parties plates (8) latérales et la bride de support (5) est un composant moulé par injection d'une seule pièce.

9. Système de fermeture rapide comprenant un ergot de retenue (1) selon l'une quelconque des revendications précédentes et un tourillon de fermeture (13), lequel présente, pour la connexion au contour intérieur (9, 10, 11, 12 ; 21) de l'ergot de retenue (1), un contre-contour ou un contour extérieur (15, 16) ainsi qu'une zone de support (17) en forme de bride.

10. Système de fermeture rapide selon la revendication 9, lequel présente en outre un élément de ressort (18) s'appuyant sur la zone de support (17).

11. Système de fermeture rapide selon la revendication 9 ou 10, **caractérisé en ce que** le contre-contour ou le contour extérieur du tourillon de fermeture (13) présente au moins un ergot (16) faisant saillie radialement à partir d'une zone de tourillon (15).
